# EUROPÄISCHE PATENTSCHRIFT

(11) **EP 1 212 224 B1**
(45) Veröffentlichungstag und Bekanntmachung des Hinweises auf die Patenterteilung: **29.10.2003**
(21) Anmeldenummer: 00964026.9
(22) Anmeldetag: 22.08.2000
(51) Int. Cl.: B60T 8/36, B60T 13/68, F16K 31/06

(54) **DRUCKSTEUERVENTIL**
PRESSURE CONTROL VALVE
SOUPAPE DE REGULATION DE PRESSION

(30) Priorität: 25.08.1999 DE 19940257; 08.02.2000 DE 10005489
(43) Veröffentlichungstag der Anmeldung: 12.06.2002
(73) Patentinhaber: Continental Teves AG & Co. oHG, 60488 Frankfurt (DE)
(72) Erfinder: KLEIN, Andreas, 61352 Bad Homburg (DE)
(86) Internationale Anmeldenummer: EP0008151
(87) Internationale Veröffentlichungsnummer: WO01014191

(56) Entgegenhaltungen:
- EP-A- 0 233 166
- WO-A-00/02755
- WO-A-92/12878
- WO-A-96/33080
- WO-A-96/33081
- WO-A-97/00433
- DE-A- 4 411 100

## Beschreibung

Die Erfindung betrifft ein Drucksteuerventil, insbesondere für elektrohydraulische Bremsanlagen, nach dem Oberbegriff des Patentanspruchs 1.

Aus der EP0233166A ist bereits ein Drucksteuerventil der gattungsbildenden Art hervorgegangen, das mit einem in einem Ventilgehäuse angeordneten Ventilkörper sowie mit einem die Deformation des Ventilgehäuses erfassenden Sensorelement versehen ist, um den im Ventilgehäuse anstehenden Flüssigkeitsdruck ermitteln zu können. Das am Ventilgehäuse angeordnete Sensorelement ist über eine Kabelverbindung mit einer Steuerelektronik verbunden, die außen am Ventilgehäuse in einer Anschlußvorrichtung angebracht ist.

Aus der Druckschrift WO96/33081A ist eine hydraulische Kraftfahrzeugbremsanlage mit elektronischer Bremsdruckregelung bekannt, die mit einem Drucksensor ausgerüstet ist, der zur Ermittlung des Drucks in einem Druckmittelpfad in einem Gehäuse befestigt ist, das mehrere Druckmodulationsventile aufnimmt. Auf dem Gehäuse ist ein Deckel befestigt, der eine Trägerplatte zur Aufnahme von elektronischen Bauteilen aufnimmt, die über einen Steckverbinder mit dem Drucksensor in Verbindung stehen.

Die WO92/12878A offenbart eine elektrohydraulische Druckregelvorrichtung mit mehreren in einem Ventilaufnahmekörper angeordneten Drucksteuerventilen, die nach dem Aufsetzen eines Deckels auf den Ventilaufnahmekörper mittels mehreren im Deckel elastisch angeordneten Ventilspulen betätigbar sind.

Es ist die Aufgabe der vorliegenden Erfindung, ein Drucksteuerventil der eingangs genannten Art derart zu gestalten, dass innerhalb eines möglichst kompakten, montagegünstigen Gesamtaufbaus mit einem relativ geringen baulichen und funktionellen Aufwand eine Übertragung und Verarbeitung des Sensorsignals erfolgt.

Diese Aufgabe wird erfindungsgemäß für ein Drucksteuerventil der angegebenen Art mit den kennzeichnenden Merkmalen des Patentanspruchs 1 gelöst.

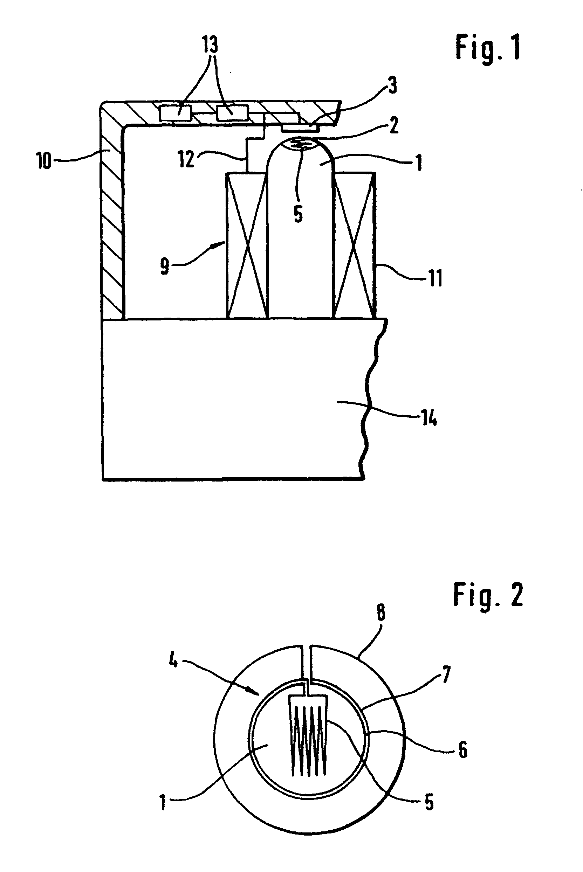

Weitere Merkmale, Vorteile und Anwendungsmöglichkeiten der Erfindung gehen im nachfolgenden aus der Beschreibung zweier Ausführungsbeispiele anhand den Fig. 1 und 2 hervor.

Es zeigen:
- Fig. 1: eine Prinzipdarstellung der erfindungswesentlichen Sensoranordnung,
- Fig. 2: ein Ausführungsbeispiel zum Aufbau eines Sensorelementes für die aus Fig. 1 vorgestellte Anordnung.

Die Fig. 1 zeigt in vereinfachter Darstellung ein in einem blockförmigen Ventilaufnahmekörper 14 angeordnetes Drucksteuerventil 9, das insbesondere für elektrohydraulische Bremsanlagen Verwendung findet. Das Drucksteuerventil 9 weist in einem Ventilgehäuse 1 einen Ventilkörper auf, der durch die elektromagnetische Betätigung einer Ventilspule 11 die in dem Ventilaufnahmekörper 14 befindlichen Druckmittelkanäle zu sperren oder zu verbinden vermag.

Ferner befindet sich oberhalb der Ventilspule 11 außen am domförmigen Ventilhülsenbereich ein Sensorelement 2, das zur Ermittlung des im Drucksteuerventil 9 anstehenden Flüssigkeitsdrucks verwendet wird. Erfindungsgemäß wird der Flüssigkeitsdruck im Ventilgehäuse 1 mittelbar vom Sensorelement 2 durch die Messung der Ventilgehäusedeformation erfasst. Bezüglich dem Aufbau des Sensorelementes 2 gibt die Fig. 1 zu erkennen, dass auf dem domförmigen Abschnitt des Ventilgehäuses 1 ein Dehnungsmeßstreifen 5 angebracht ist, der in Verbindung mit einem nachfolgend in der Fig. 2 dargestellten Messring 6 und Referenzring 7 ein Messelement 4 bildet, das über den Erregerring 8 ein für die Ventilgehäusedeformation bei hydraulischer Druckänderung repräsentatives Signal erfasst und über eine geeignete Erfassungs- und Auswerteschaltung in ein Drucksignal umwandelt.

Nach Fig. 1 befindet sich die Signalempfangs- und Erregerbaugruppe 3 unmittelbar an einem Deckel 10 angebracht, der auch die zum Betrieb des Drucksteuerventils 9 erforderliche Steuer- und/oder Regelelektronik 13 aufnimmt, welche über die elektrischen Kontakte 12 der Ventilspule 11 elektrisch als auch mechanisch verbunden ist. Die Ventilspule 11, die Steuer- und/oder Regelelektronik 13 und die Signalempfangs- und Erregerbaugruppe 3 sind somit zu einer vorgefertigten Baugruppe im Deckel 10 zusammengefasst. Der Deckel 10 ist auf dem das Drucksteuerventil 9 tragenden Ventilaufnahmekörper 14 aufgesetzt. Aus der Zeichnung nach Fig. 1 ist ersichtlich, dass das Sensorelement 2 durch einen Luftspalt von der Signalempfangs- und Erregerbaugruppe 3 getrennt ist, so dass eine berührungslose, d.h. kontaktlose Signalübertragung von einem im Sensorelement 2 integrierten Meßelement 4, das am Drucksteuerventil 9 angebracht ist, zu der Signalempfangs- und Erregerbaugruppe 3 gelangt, in der das die Ventilgehäusedeformation charakterisierende Sensorsignal in ein Drucksignal transformiert wird. Zum Betrieb des Sensorelementes 2 wird deshalb vorgeschlagen, dass über die Signalempfangs- und Erregerbaugruppe 3 in einer im Sensorelement 2 integrierten Empfangsschaltung eine elektrische Spannung induziert wird, die den Betrieb des dem Sensorelement 2 zugeordneten Meßelements 4 ermöglicht.

Bei Wunsch oder Bedarf kann zur Stabilisierung der Signalübertragungsqualität das Sensorelement 2 als auch die Signalempfangs- und Erregerbaugruppe 3 mit einer entsprechenden Signalverstärkungs- und/oder Kompensationsschaltung versehen werden.

Um eine möglichst präzise Signalerfassung und Signalübertragung im Hinblick auf etwaige Luftspalttoleranzen zwischen dem Sensorelement 2 und dem Signalempfangs- und Erregerbaugruppe 3 sicherzustellen, wird vorgeschlagen, daß das Sensorelement 2 nicht nur mit dem Meßelement 4, sondern zusätzlich mit einer geeigneten Referenzschaltung versehen ist.

Ein konkretes Ausführungsbeispiel, das unabhängig von der Größe des zwischen dem Ventildom und dem Deckel 10 bestehenden Luftspalts eine stabile Signalübertragungsqualität gewährleistet, soll im nachfolgenden anhand der Fig. 2 schematisch dargestellt werden.

Die Fig. 2 zeigt hierzu einen zweckmäßigen Aufbau des Sensorelementes 2, das andeutungsweise bereits in Fig. 1 dargestellt ist. Das Sensorelement 2 ist in einer Draufsicht auf den Ventildom des Ventilgehäuses 1 gezeigt. Der Ventildom stellt den unter Wirkung des Hydraulikdrucks verformungssensiblen Bereich des Drucksteuerventils 9 dar.

Das konzentrisch zur Ventilachse ausgerichtete Sensorelement 2 weist im einzelnen einen Referenzring 7 und einen mit einem Dehnungsmeßstreifen 5 verbundenen Meßring 6 auf, die auf den dünnwandigen Hülsenbereich des Ventilgehäuses 1 aufgesetzt sind. Gleichfalls koaxial zum Sensorelement 2 ist der Erregerring 8 angeordnet und über den Luftspalt zum Drucksteuerventil 9 beabstandet. Der Erregerring 8 bildet mit der Signalempfangs- und Erregerbaugruppe 3 eine Baueinheit, die in dem zum Drucksteuerventil 9 beabstandeten Deckel 10 angeordnet ist. In dem Erregerring 8 wird durch die Signalempfangs- und Erregerbaugruppe 3 eine Spannung induziert, die zu einem gewissen Teil durch den Referenzring 7 und zu einem weiteren Teil durch den Meßring 6 zum Dehnungsmeßstreifen 5 gelangt. Der Referenzring 7 als auch der Meßring 6 induzieren wiederum magnetische Felder, die über den Erregerring 8 aufgenommen werden. Durch die Feldinduktion im Erregerring 8 ist dieser von einem Wechselstrom durchflossen. Auch der Meßring 6 und Referenzring 7 sind von einem induzierten Strom durchflossen, so daß die hierbei erzeugten Magnetfelder der Ringe 6, 7 über geeignete Sensorelemente, beispielsweise mittels Hallelemente erfaßt werden können. Es stehen folglich zwei Sensorsignale zur Verfügung, über die die Deformation des Ventilgehäuses 1 und somit der im Drucksteuerventil 9 befindliche Druck erfaßt werden kann.

Eine derartige Anordnung eignet sich besonders für Elektrohydraulische Bremsanlagen, die eine Vielzahl von solchen Sensorelementen 2 benötigen, die baulich zwischen dem Ventilaufnahmekörper 14 und einem auf dem Ventilaufnahmekörper 14 aufgesetzten Deckel 10, der die Steuer- und Regelelektronik 13 aufweist, platzsparend untergebracht werden können. Ein weiterer Anwendungsfall ergibt sich für Antriebsschlupf- und Fahrdynamikregelsystemen in Kraftfahrzeugbremsanlagen.

### Bezugszeichenliste

- 1: Ventilgehäuse
- 2: Sensorelement
- 3: Signalempfangs- und Erregerbaugruppe
- 4: Meßelement
- 5: Dehnungsmeßstreifen
- 6: Meßring
- 7: Referenzring
- 8: Erregerring
- 9: Drucksteuerventil
- 10: Deckel
- 11: Ventilspule
- 12: Kontakt
- 13: Steuer- und/oder Regelelektronik
- 14: Ventilaufnahmekörper

## Patentansprüche

1. Drucksteuerventil (9), insbesondere für elektrohydraulische Bremsanlagen, mit einem in einem Ventilgehäuse (1) angeordneten Ventilkörper sowie mit einem Sensorelement (2) zur Ermittlung des im Ventilgehäuse (1) anstehenden Flüssigkeitsdrucks, der im Ventilgehäuse (1) mittelbar vom Sensorelement (2) durch die Messung der Ventilgehäusedeformation erfasst wird, wobei das Sensorelement (2) an einem verformungssensiblen Bereich des Ventilgehäuses (1) angeordnet ist und wobei die Ventilgehäusedeformation in ein Sensorsignal transformiert wird, **dadurch gekennzeichnet, dass** das Sensorsignal über eine berührungslose Signalübertragung des Sensorelements (2) am Drucksteuerventil (9) zu einer Signalempfangs- und Erregerbaugruppe (3) gelangt, die sich in einem definierten Abstand zum Sensorelement (2) in einem Deckel (10) befindet, dass der Deckel (10) ein zum Betrieb des Drucksteuerventils (9) erforderliche Steuer- und/oder Regelelektronik (13) aufnimmt, die mit mehreren elektrischen Kontakten (12) einer Ventilspule (11) des Drucksteuerventils (9) elektrisch als auch mechanisch verbunden ist, und dass die Ventilspule (11), die Steuer- und/oder Regelelektronik (13) und die Signalempfangs- und Erregerbaugruppe (3) zu einer vorgefertigten Baugruppe im Deckel (10) zusammengefasst sind, der auf einen das Drucksteuerventil (9) tragenden Ventilaufnahmekörper (14) aufgesetzt ist.

2. Drucksteuerventil nach Anspruch 1, **dadurch gekennzeichnet, dass** zum Betrieb des Sensorelementes (2) die Signal- und Erregerbaugruppe (3) über eine im Sensorelement (2) integrierte Empfangsschaltung eine elektrische Spannung induziert, die einem dem Sensorelement (2) zugehörigen Meßelement (4) zugeführt wird.

3. Drucksteuerventil nach Anspruch 1 oder 2, **dadurch gekennzeichnet, dass** das Sensorelement (2) und/oder die Signalempfangs- und Erregerbaugruppe (3) zur Stabilisierung der Signalstärke während der Signalübertragung mit einer Kompensationsschaltung versehen ist.

4. Drucksteuerventil nach Anspruch 2, **dadurch gekennzeichnet, dass** das Meßelement (4) mit einer Referenzschaltung, vorzugsweise einer Widerstandsschaltung in Form eines am Ventilgehäuse (1) angebrachten Dehnungsmeßstreifens (5) versehen ist, wobei aus dem Meßelementensignal und dem Referenzsignal des Dehnungsmeßstreifens (5) die Ventilgehäusedeformation mit Hilfe einer Signalerfassungs- und Auswerteschaltung in ein Drucksignal umgewandelt wird.

5. Drucksteuerventil nach Anspruch 1, **dadurch gekennzeichnet, dass** das Sensorelement (2) einen Meßring (6) und einen mit einem Dehnungsmeßstreifen (5) verbundenen Referenzring (7) aufweist, die vorzugsweise am dünnwandigen Hülsenbereich des Ventilgehäuses (1) befestigt sind.

6. Drucksteuerventil nach Anspruch 5, **dadurch gekennzeichnet, dass** koaxial beabstandet zum Sensorelement (2) ein Erregerring (8) angeordnet ist, der mit der Signalempfangs- und Erregerbaugruppe (3) eine Baueinheit bildet, die in dem zum Drucksteuerventil (9) beabstandeten Deckel (10) angeordnet ist.

## Claims

1. Pressure control valve (9), in particular for electrohydraulic brake systems, including a valve member arranged in a valve housing (1) and a sensor element (2) for determining the fluid pressure that prevails in the valve housing (1) and is indirectly determined in the valve housing (1) by the sensor element (2) by way of the measurement of the deformation of the valve housing, with said sensor element (2) being arranged at a deformation-sensitive area of the valve housing (1) and the deformation of the valve housing being transformed into a sensor signal,
**characterized in that** the sensor signal, by way of a non-contact signal transmission of the sensor element (2) on the pressure control valve (9), is conducted to a signal-receiving and exciter assembly (3) which is arranged at a defined distance from the sensor element (2) in a cover (10, **in that** said cover (10) accommodates a controlling and/or regulating electronics (13) that is required for the operation of the pressure control valve (9) and is electrically and mechanically connected to several electric contacts (12) of a valve coil (11) of the pressure control valve (9), and **in that** the valve coil (11), the controlling and/or regulating electronics (13), and the signal-receiving and exciter assembly (3) are grouped to form a prefabricated subassembly in the cover (10) which latter is mounted onto a valve-accommodating member (14) that carries the pressure control valve (9).

2. Pressure control valve as claimed in claim 1,
**characterized in that** for the operation of the sensor element (2), the signal-receiving and exciter assembly (3) induces an electric voltage by way of a receiving circuit integrated in the sensor element (2) which is passed to a gauge element (4) associated with the sensor element (2).

3. Pressure control valve as claimed in claim 1 or 2,
**characterized in that** the sensor element (2) and/or the signal-receiving and exciter assembly (3) includes a compensating circuit to stabilize the signal strength during the signal transmission.

4. Pressure control valve as claimed in claim 2,
**characterized in that** the gauge element (4) includes a reference circuit, preferably a resistance connection in the form of a wire gauge strain (5) fitted to the valve housing (1), and the measuring element signal and the reference signal of the wire gauge strain (5) representative of the valve housing deformation are transformed into a pressure signal by means of a signal-determination and evaluation circuit.

5. Pressure control valve as claimed in claim 1,
**characterized in that** the sensor element (2) includes a gauge ring (6) and a reference ring (7) connected to a wire gauge strain (5), the said parts being preferably attached to the thin-walled sleeve area of the valve housing (1).

6. Pressure control valve as claimed in claim 5,
**characterized in that** an exciter ring (8) is arranged so as to be coaxially spaced from the sensor element (2) and, along with the signal-receiving and exciter assembly (3), forms a construction unit which is arranged in the cover (10) spaced from the pressure control valve (9).

## Revendications

1. Soupape de commande de pression (9), en particulier pour systèmes de freinage électro-hydrauliques, comportant un corps de soupape disposé dans le boîtier de soupape (1) ainsi qu'un élément à capteur (2) pour déterminer la pression du liquide se produisant dans le boîtier de soupape (1), laquelle est détectée dans le boîtier de soupape (1) par l'intermédiaire de l'élément à capteur (2), par la mesure de la déformation du boîtier de la soupape, l'élément à capteur (2) étant disposé dans une zone sensible à la déformation du boîtier de soupape (1) et la déformation du boîtier de la soupape étant transformée en un signal de capteur, **caractérisée en ce que** le signal de capteur parvient, par une transmission de signaux sans contact de l'élément à capteur (2) sur la soupape de commande de pression (9), à un ensemble de réception de signaux et d'excitation (3) qui se trouve à une distance définie de l'élément à capteur (2) dans un couvercle (10), **en ce que** le couvercle (10) reçoit une électronique de commande et/ou de régulation nécessaire au fonctionnement de la soupape de commande de pression (9), laquelle est reliée électriquement ainsi que mécaniquement à plusieurs contacts électriques (12) d'une bobine de soupape (11) de la soupape de commande de pression (9), et **en ce que** la bobine de soupape (11), l'électronique de commande et/ou de régulation (13) ainsi que l'ensemble de réception de signaux et d'excitation (3) sont réunis dans le couvercle (10) en un ensemble préfabriqué qui est placé sur un corps de réception de soupape (14) portant la soupape de commande de pression (9).

2. Soupape de commande de pression selon la revendication 1, **caractérisée en ce que** pour le fonctionnement de l'élément à capteur (2), l'ensemble de réception de signaux et d'excitation (3) induit, à travers un circuit de réception intégré à l'élément à capteur (2), une tension électrique qui est envoyée à l'élément de mesure (4) faisant partie de l'élément à capteur (2).

3. Soupape de commande de pression selon la revendication 1 ou 2, **caractérisée en ce que** l'élément à capteur (2) et/ou l'ensemble de réception de signaux et d'excitation (3) est pourvu d'un circuit de compensation pour la stabilisation de l'intensité des signaux pendant la transmission des signaux.

4. Soupape de commande de pression selon la revendication 2, **caractérisée en ce que** l'élément de mesure (4) est pourvu d'un circuit de référence, de préférence d'un circuit à résistance sous la forme d'une jauge d'allongement (5) placée sur le boîtier de soupape (1), à partir du signal de l'élément de mesure et du signal de référence de la jauge d'allongement (5), la déformation du boîtier de la soupape étant convertie en un signal de pression à l'aide d'un circuit de détection des signaux et d'exploitation.

5. Soupape de commande de pression selon la revendication 1, **caractérisée en ce que** l'élément à capteur (2) comporte une bague de mesure (6) et une bague de référence (7) reliée à une jauge d'allongement (5), lesquelles sont fixées de préférence à la zone de douille à paroi mince du boîtier de soupape (1).

6. Soupape de commande de pression selon la revendication 5, **caractérisée en ce qu'**une bague d'excitation (8) est disposée à distance coaxiale de l'élément à capteur (2) et forme avec l'ensemble de réception de signaux et d'excitation (3), une unité de construction qui est disposée dans le couvercle (10) espacée de la soupape de commande de pression (9).
